# EUROPÄISCHE PATENTSCHRIFT

(11) **EP 4 244 959 B1**
(45) Veröffentlichungstag und Bekanntmachung des Hinweises auf die Patenterteilung: **15.04.2026**
(21) Anmeldenummer: 21865364.0
(22) Anmeldetag: 09.12.2021
(51) Int. Cl.: H02K 5/04, H02K 11/33

(54) **ELEKTROMOTOR FÜR EIN KRAFTFAHRZEUG**
ELECTRIC MOTOR FOR A MOTOR VEHICLE
MOTEUR ÉLECTRIQUE POUR VÉHICULE AUTOMOBILE

(30) Priorität: 09.12.2020 DE 102020215588; 09.12.2020 DE 102020215587; 01.02.2021 DE 102021200885
(43) Veröffentlichungstag der Anmeldung: 20.09.2023
(73) Patentinhaber: Brose Fahrzeugteile SE & Co. Kommanditgesellschaft, Würzburg, 97076 Würzburg (DE)
(72) Erfinder: GEILING, Christian, 97234 Reichenberg (DE); HIRSCH, Daniel, 97204 Höchberg (DE); OBENDORFER, Moritz, 97072 Würzburg (DE); THURMANN, Patrick, 97070 Würzburg (DE)
(74) Vertreter: FDST Patentanwälte
(86) Internationale Anmeldenummer: PCT/DE2021/100988
(87) Internationale Veröffentlichungsnummer: WO 2022/122086

(56) Entgegenhaltungen:
- DE-A1- 102017 205 532
- US-A1- 2015 229 178
- US-A1- 2017 237 312
- US-A1- 2019 305 625

## Beschreibung

Die Erfindung betrifft einen Elektromotor, insbesondere für ein Brems- oder Lenkungssystem eines Kraftfahrzeugs.

In einem modernen Kraftfahrzeug werden Elektromotoren in vielfältiger Weise als Antriebe für unterschiedliche Stellelemente eingesetzt. Elektromotoren werden beispielsweise als Fensterheber-, Schiebedach- oder Sitzverstellantriebe, als Kühlerlüfterantriebe oder als Getriebeaktuatoren eingesetzt. Weiterhin werden Elektromotoren insbesondere in Lenkungssystemen (engl.: Electrical Power Steering, EPS) oder Bremssystemen (engl.: Integrated Braking Systems, IBS) eingesetzt. Ein insbesondere bürstenloser Elektromotor als elektrische Drehstrommaschine weist in der Regel einen Stator mit einer Anzahl von beispielsweise sternförmig angeordneten Statorzähnen auf, welche eine elektrische Drehfeld- oder Statorwicklung in Form einzelner Spulen tragen, die ihrerseits aus einem Isolierdraht gewickelt sind. Die Spulen sind mit deren Spulenenden (Wickeldrahtenden) einzelnen Strängen oder Phasen zugeordnet und untereinander in einer vorbestimmten Weise verschaltet und an Phasenanschlüsse zur Bestromung der Drehfeldwicklung geführt.

Im Falle eines bürstenlosen Elektromotors als dreiphasige Drehstrommaschine weist der Stator drei Phasen und damit zumindest drei Phasenleiter oder Phasenwicklungen auf, die jeweils phasenversetzt mit elektrischen Strom beaufschlagt werden, um ein magnetisches Drehfeld zu erzeugen, in dem ein üblicherweise mit Permanentmagneten versehener Rotor oder Läufer rotiert. Die Phasenenden der Phasenwicklungen werden zur Ansteuerung des Elektromotors an eine Motorelektronik geführt. Die Spulen der Drehfeldwicklung werden hierbei in Sternschaltung oder in Dreieckschaltung verschaltet und mit den drei Phasenanschlüssen elektrisch kontaktiert.

Zur Führung und Verschaltung der Spulenenden sind beispielsweise Schalteinheiten als Verschaltsysteme oder Kontaktvorrichtungen üblich, welche insbesondere stirnseitig auf den Stator beziehungsweise auf ein Statorpaket aufgesetzt werden. Derartige Schalteinheiten dienen insbesondere dazu, die Spulenenden der die Spulenwicklungen bildenden Wickeldrahtabschnitte elektrisch leitend zu verbinden, so dass einzelne Spulenenden elektrisch miteinander kurzgeschlossen sind, und somit die Spulen- oder Phasenwicklungen seriell bestrombar sind.

Elektromotoren, insbesondere Antriebe für Bremssysteme und Lenkung, weisen ein (Motor-)Gehäuse und einen (Gehäuse-)Deckel auf. In dem Motorgehäuse ist in der Regel ein elektrisch kommutierter Stator befestigt. Im Motorbetrieb kommt es aufgrund der Anregung der Bauteile zu Schwingungen oder Vibrationen im System, welche sich beispielsweise als Körperschall auf das Motorgehäuse und/oder den Gehäusedeckel ausbreiten können. Insbesondere bei einem als Lagerschild ausgebildeten Gehäusedeckel können hierbei axiale Schwingungen auftreten, wodurch ungewollte Geräusche und elastische Verformungen entstehen können.

Bremssysteme sind beispielsweise an einer Spritzwand des Kraftfahrzeugs befestigt, so dass sich die im Motorbetrieb entstehenden Geräusche in den Fahrgastraum ausbreiten können. Dieser Effekt ist bei Bremssystemen, insbesondere bei autonom fahrenden oder fahrbaren Kraftfahrzeugen, unerwünscht, weil Insassen besonders sensibel auf Bremsgeräusche, welche nicht vom Fahrer veranlasst werden, reagieren können.

Der Erfindung liegt die Aufgabe zugrunde, einen besonders geeigneten Elektromotor für ein Kraftfahrzeug anzugeben. Insbesondere sollen axiale Schwingungen und ein Einfluss des Gehäusedeckels oder Lagerschilds auf eine akustische Leistung des Elektromotors reduziert werden. Der Erfindung liegt weiterhin die Aufgabe zugrunde, einen besonders geeigneten Stator für einen solchen Elektromotor anzugeben.

Die US 2015/229178 A1 offenbart eine Befestigungsstruktur zum Befestigen einer Drahtverbindungsplatte, die eine Sammelschiene mit einer ringförmigen Form und einen Drahtverbindungsplattenhalter zum Halten der Sammelschiene enthält. Die Befestigungsstruktur umfasst einen Rahmen, der eine zylindrische Form hat, um die Drahtverbindungsplatte darin aufzunehmen, und ein Blechelement zum Befestigen der Drahtverbindungsplatte. Ein Ende des Blechelements ist an einem Flansch des Rahmens befestigt, und ein anderes Ende des Blechelements drückt eine Endfläche der Drahtanschlussplatte in einer axialen Richtung des Rahmens, um dadurch die Drahtanschlussplatte zu befestigen. Die Drahtverbindungsplatte wird durch die Elastizität des Blechelements fixiert, so dass die Drahtverbindungsplatte auch bei Stoßbelastungen gehalten werden kann.

In der US 2019/305625 A1 ist ein Motor offenbart, welcher einen Rotor mit einer Welle, die sich entlang einer zentralen Achse erstreckt, einen Stator, der dem Rotor radial gegenüberliegt, eine Leiterplatte, die elektrisch mit einer Spule des Stators verbunden ist, und ein Motorgehäuse aufweist. Das Motorgehäuse umfasst einen ersten Gehäuseabschnitt mit einer röhrenförmigen Bodenform, um den Rotor, den Stator und die Leiterplatte aufzunehmen, und einen zweiten Gehäuseabschnitt mit einer röhrenförmigen Bodenform, der dem ersten Gehäuseabschnitt axial gegenüberliegt und mit dem ersten Gehäuseabschnitt verbunden ist. Ein Erdungsanschluss zur elektrischen Verbindung einer inneren Umfangsfläche des zweiten Gehäuseteils und einer Erdungselektrode auf der Leiterplatte ist vorgesehen.

Die US 2017/237312 A1 beschreibt einen Stellantrieb mit einem Gehäuse, das einen inneren Hohlraum für einen Motor, Getriebebaugruppen und eine gedruckte Schaltung, die über dem Motor und den Getriebebaugruppen liegt, definiert. Ein elastomeres Dichtungsband befindet sich zwischen dem Gehäuse und dem Deckel zum Abdichten des inneren Hohlraums des Gehäuses. Das Dichtungsband umfasst mehrere komprimierbare Elastomerprofile, die an der Abdeckung anliegen und jeweils eine Kraft auf die gedruckte Schaltung ausüben, um die Vibration der gedruckten Schaltung im Gehäuse zu verhindern.

Hinsichtlich des Elektromotors wird die Aufgabe mit den Merkmalen des Anspruchs 1 erfindungsgemäß gelöst. Vorteilhafte Ausgestaltungen und Weiterbildungen sind Gegenstand der Unteransprüche. Die im Hinblick auf den Elektromotor angeführten Vorteile und Ausgestaltungen sind sinngemäß auch auf den Stator übertragbar und umgekehrt.

Der erfindungsgemäße Elektromotor ist für ein Kraftfahrzeug, insbesondere für ein Brems- oder Lenkungssystem eines Kraftfahrzeugs, vorgesehen sowie dafür geeignet und eingerichtet. Das Kraftfahrzeug kann beispielsweise ein autonom fahrendes oder fahrbares Kraftfahrzeug sein.

Der Elektromotor weist ein beispielsweise topfförmiges Motorgehäuse auf, welches mit einem Gehäusedeckel stirnseitig abgedeckt oder abdeckbar ist. Der Gehäusedeckel ist hierbei vorzugsweise als ein Lagerschild ausgeführt. Nachfolgend ist der Gehäusedeckel daher auch als Lagerschild bezeichnet, wobei die nachfolgenden Ausführungen ohne Beschränkung der Allgemeinheit sinngemäß auch auf andere Gehäusedeckel übertragbar sind.

Der Elektromotor weist einen Stator, insbesondere einen elektrisch kommutierbaren Stator, auf, welcher in das Motorgehäuse eingesetzt ist. Der Stator weist eine stirnseitig aufgesetzte Schalteinheit (Anschlusseinheit, Kontakteinheit) auf. Die ringförmige Schalteinheit dient hierbei zur Kontaktierung und Verschaltung einer mehrphasigen Statorwicklung, welche beispielsweise auf Statorzähne eines Statorpakets aufgebracht ist.

Erfindungsgemäß ist an der Schalteinheit mindestens ein in Richtung des Gehäusedeckels axial emporstehendes Abstandselement angeordnet, welches zumindest in radialer und/oder tangentialer Richtung elastisch ausgeführt ist. Dadurch ist ein besonders geeigneter Elektromotor realisiert.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Die im Betrieb auftretenden Schwingungs- oder Vibrationsbewegungen am Gehäusedeckel werden somit erfindungsgemäß durch mindestens ein elastisches Abstandselement mit einer vorzugsweise möglichst hohen inneren Dämpfung beruhigt. Hierzu ist das Abstandselement zwischen der Schalteinheit und dem Lagerschild angeordnet. Das axial orientierte Abstandselement stütz hierbei vorzugsweise den Gehäusedeckel beziehungsweise das Lagerschild gegenüber der Schalteinheit ab, wodurch Schwingungen oder Vibrationen des Gehäusedeckels gedämpft oder beruhigt werden.

Unter "axial" oder einer "Axialrichtung" wird hier und im Folgenden insbesondere eine Richtung parallel (koaxial) zur Drehachse des Elektromotors, also senkrecht zu den Stirnseiten des Stators verstanden. Entsprechend wird hier und im Folgenden unter "radial" oder einer "Radialrichtung" insbesondere eine senkrecht (quer) zur Drehachse des Elektromotors orientierte Richtung entlang eines Radius des Stators beziehungsweise des Elektromotors verstanden. Unter "tangential" oder einer "Tangentialrichtung" wird hier und im Folgenden insbesondere eine Richtung entlang des Umfangs des Stators oder des Elektromotors (Umfangsrichtung, Azimutalrichtung), also eine Richtung senkrecht zur Axialrichtung und zur Radialrichtung, verstanden.

Durch die Erfindung wird die akustische Leistung des Elektromotors verbessert. Des Weiteren entstehen im Wesentlichen keine zusätzlichen Kosten, da das Abstandselement beziehungsweise dessen Geometrie vergleichsweise einfach und kostengünstig ausführbar ist.

Das Abstandselement kann hierbei flexibel an kundenspezifische Anforderungen oder Bedürfnisse angepasst werden (Material, Durchmesser, Öffnung usw.). Insbesondere ist eine gezielte Beeinflussung des akustischen Verhaltens ermöglicht, indem die Art der Abstützung auf die anwendungsspezifische (Frequenz, Verformung) Anforderung des Elektromotors abgestimmt wird.

Vorzugsweise ist das Abstandselement hierbei in radialer Richtung so nahe wie möglich an der Längsachse (Drehachse) des Elektromotors angeordnet, um axiale Schwingungen des Lagerschilds zu minimieren. Das Abstandselement kann auch mehrmals auf den gleichen Kreisdurchmesser oder auf radial unterschiedliche Positionen angewendet werden. Mit anderen Worten ist eine Anzahl von Abstandselementen möglich, welche radial und/oder tangential verteilt angeordnet sind. Die Steifigkeit der Abstützung kann durch die Auswahl des Materials, die Größe des Elements, die Anzahl der Elemente sowie die Wahl des Teilkreisdurchmessers eingestellt werden.

In einer vorteilhaften Ausführung ist der Gehäusedeckel federnd durch das Abstandselement abgestützt. Dadurch werden im Motorbetrieb auftretende Schwingungen und Vibrationen - und somit eine Geräuschbildung/-entstehung - zuverlässig reduziert oder gedämpft. Des Weiteren wird die Lebensdauer der Lager, welche im Lagerschild befestigt sind, erhöht.

Das Abstandselement kann beispielsweise als ein zur Schalteinheit separat ausgeführtes Bauteil ausgebildet sein. Ebenso denkbar ist, dass das Abstandselement ein Teil eines Kontaktadapters oder Kundensteckers ist, welcher mit dem Stator und/oder der Schalteinheit koppelbar ist.

Beispielsweise sind die Schalteinheit und das Abstandselement als ein Zwei- oder Mehrkomponenten-Spritzgussteil ausgeführt. Beispielsweise ist das Abstandselement als ein Kunststoffelement oder Kunststoffkörper ausgeführt, und ist vorzugsweise integraler Bestandteil der Schalteinheit oder des Kontaktadapters. Insbesondere kann das Abstandselement als ein Kunststoffdom an der Schalteinheit angebracht, angeformt oder angespritzt sein.

In einer bevorzugten Ausgestaltung ist das Abstandselement einstückig, also einteilig oder monolithisch, an die Schalteinheit angeformt. Das Abstandselement ist also Teil der Schalteinheit. Dadurch sind keine zusätzlichen Teile bei der Montage des Elektromotors notwendig, wodurch die Herstellung des Elektromotors vereinfacht wird. Die Schalteinheit, und somit das Abstandselement, sind beispielsweise als ein gemeinsames Spritzgussteil aus glasfaserverstärktem Polyamid, beispielsweise aus PA6-GF30, hergestellt.

In einer zweckmäßigen Ausführung liegt das Abstandselement freiendseitig an dem Gehäusedeckel an. Insbesondere liegt das Abstandselement hierbei direkt, also unmittelbar, an dem Gehäusedeckel an.

Zur Montage des Gehäusedeckels beziehungsweise des Lagerschilds wird dieser(s) beispielsweise in das Motorgehäuse eingepresst (Press-Fit-Befestigung). Dies bedeutet, dass das Abstandselement im Montagezustand zumindest mit einer gewissen mechanischen Vorspannung oder Vorbelastung beaufschlagt ist. Mit anderen Worten wird das elastische Abstandselement zwischen der Schalteinheit und dem Lagerschild in Radial- und/oder Tangentialrichtung gestaucht, und somit zumindest abschnittsweise elastisch verformt. Während das Lagerschild im Motorgehäuse befestigt wird, kann somit ein Toleranzausgleich mittels elastischer Verformung oder Abstandselement stattfinden. Für diesen Toleranzausgleich kann das Abstandselement eine hierfür vorgesehene Form oder Geometrie aufweisen, mit der die Reaktionskraft auf das Lagerschild übertragen wird. Dadurch wird die Wirkung in allen Toleranzlagen gewährleistet. Mit anderen Worten wirkt das elastische Abstandselement als ein Vorspannelement zur Befestigung des Gehäusedeckels.

Das Abstandselement kann als Geometrie beispielsweise eine Öffnung (Schlitz) in radialer Richtung oder eine Öffnung in tangentialer Richtung aufweisen. Mit anderen Worten weist das Abstandselement zur elastischen Verformung beispielsweise eine radiale Schlitzung (für eine symmetrische Verformung) oder eine tangentiale Schlitzung (für eine asymmetrische Verformung) auf.

In einer möglichen Ausbildung weist der Gehäusedeckel einen stufenförmigen Versatz auf, an welchem das Abstandselement freiendseitig anliegt. Unter einem stufenförmigen Versatz ist hierbei ein Versatz in axialer Richtung in Form einer Doppelknickstruktur zu verstehen. Bei einer axialen Belastung gleitet das Freiende des Abstandselements an der Stufe des Gehäusedeckels entlang, und wird hierbei insbesondere in Radialrichtung gebogen.

Erfindungsgemäß weist das Abstandselement einen axial emporstehenden Säulenkörper mit einer freiendseitigen Spitze auf. Der Säulenkörper weist hierbei in einer radialen und tangentialen Schnittebene eine runde oder polygonale, insbesondere rechteckförmige, Querschnittsform auf. Bei einer rechteckförmigen Querschnittsform sind die Kurzseiten des Abstandselements hierbei im Wesentlichen in Radialrichtung orientiert, wobei die Langseiten im Wesentlichen in Tangentialrichtung orientiert sind. Das Abstandselement weist somit in Tangentialrichtung eine größere mechanische Steifigkeit auf, so dass es bei einer Belastung insbesondere in Radialrichtung gebogen oder ausgelenkt wird.

Die freiendseitige Spitze weist hierbei eine geeignete Geometrie auf, um die elastische Verformung zu kontrollieren, und die (Vorspann-)Kraft auf das Lagerschild auszuüben. Die Spitze weist in einer axialen und radialen Schnittebene erfindungsgemäß eine etwa nasenförmige Querschnittsform mit zwei unterschiedlichen Steigungen als Anlagefläche für den Gehäusedeckel auf. Mit anderen Worten weist die Anlagefläche einen Knick auf. Dies bedeutet, dass zwei Teil-Anlageflächen mit unterschiedlichen Steigungen oder Neigungen gebildet sind. Die zwei Steigungen realisieren insbesondere eine gezielte oder kontrollierte Verformung oder Biegung des Abstandselements im Zuge einer axialen Belastung.

Ein zusätzlicher oder weiterer Aspekt der Erfindung sieht vor, dass sich der Durchmesser des Abstandselements entlang der Axialrichtung verändert. Der Durchmesser kann sich hierbei abschnittsweise oder über die gesamte axiale Höhe des Abstandselements verändern. Dadurch ist das Abstandselement besonders flexibel anpassbar. In einer geeigneten Weiterbildung verjüngt sich der Durchmesser des Abstandselements entlang der Axialrichtung insbesondere in radialer und/oder tangentialer Richtung. Mit anderen Worten weist das Abstandselement in Richtung des Gehäusedeckels beispielsweise eine Front- und/oder Seitenverjüngung auf.

Der erfindungsgemäße Stator ist für einen vorstehend beschriebenen Elektromotor geeignet und eingerichtet. Der Stator weist hierbei eine Schalteinheit mit mindestens einem axial emporstehenden Abstandselement auf, welches zumindest in radialer und/oder tangentialer Richtung elastisch ausgeführt ist.

Nachfolgend sind Ausführungsbeispiele der Erfindung anhand einer Zeichnung näher erläutert. Darin zeigen:
- Fig. 1: in perspektivischer Darstellung einen Elektromotor eines Bremssystems mit einem Motorgehäuse und einem Lagerschild,
- Fig. 2: in perspektivischer Darstellung ausschnittsweise eine Schalteinheit eines Stators mit einem Abstandselement in einer nicht erfindungsgemäßen Ausführungsform,
- Fig. 3: in perspektivischer Darstellung das Abstandselement,
- Fig. 4: in Draufsicht das Abstandselement,
- Fig. 5a, 5b: in Draufsicht das Abstandselement mit einer radialen und tangentialen Öffnung,
- Fig. 6: in einer Schnittansicht das Abstandselement,
- Fig. 7: ein Diagramm hinsichtlich der Verformungskräfte bei einer tangentialen Öffnung,
- Fig. 8: ein Diagramm hinsichtlich der Verformungskräfte bei einer radialen Öffnung,
- Fig. 9: in perspektivischer Darstellung das Abstandselement in einer ersten und zweiten erfindungsgemäßen Ausführungsform,
- Fig. 10: in Schnittansicht das Abstandselement mit dem Gehäusedeckel,
- Fig. 11: in perspektivischer Darstellung einen Stator des Elektromotors mit einem Abstandselement in einer dritten erfindungsgemäßen Ausführungsform, und
- Fig. 12, 13: in perspektivischer Darstellung ausschnittsweise den Stator.

Einander entsprechende Teile und Größen sind in allen Figuren stets mit den gleichen Bezugszeichen versehen.

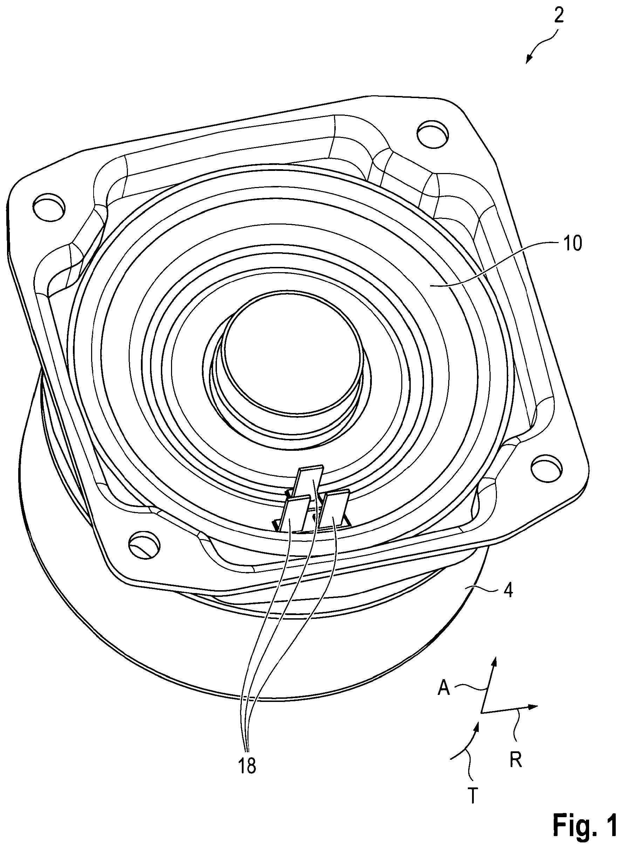

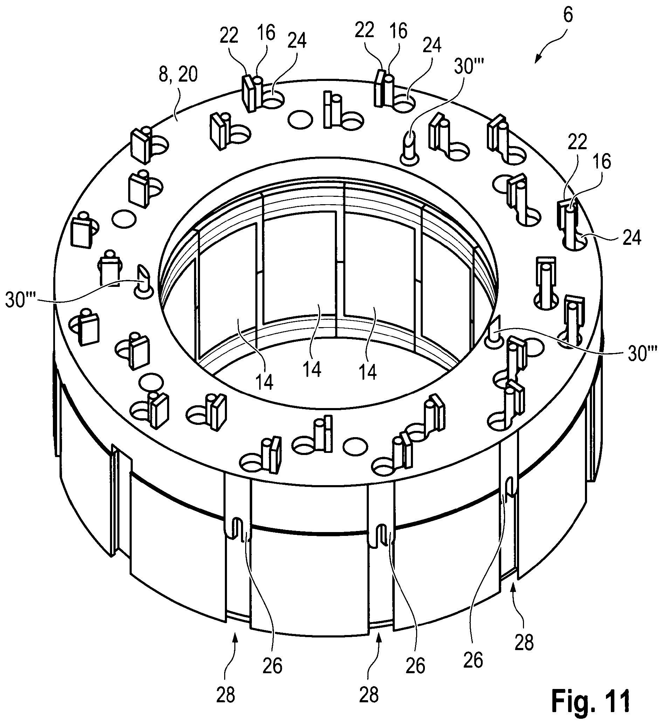

Die Fig. 1 zeigt in einen Elektromotor 2 eines nicht näher gezeigten Bremssystems. Der Elektromotor 2 weist ein topfförmiges Motorgehäuse 4 auf, in welchen ein Stator 6 (Fig. 11) mit einer Schalteinheit 8 eingesetzt ist. Das Motorgehäuse 4 ist stirnseitig mittels eines Lagerschilds als Gehäusedeckel 10 verschlossen. Im Betrieb können Schwingungen und Vibrationen des Gehäusedeckels 10, insbesondere entlang einer Axialrichtung A, auftreten. In den Figuren ist die Axialrichtung mit A bezeichnet, wobei eine Tangentialrichtung mit T und eine Radialrichtung mit R bezeichnet sind.

Der insbesondere bürstenlose Elektromotor 2 umfasst einen nicht näher gezeigten Rotor, welcher drehfest mit einer Motorwelle gekoppelt ist. Der Rotor ist hierbei rotierbar innerhalb des Stators 6 angeordnet. Der Stator 6 umfasst ein Statorpaket 12, beispielsweise ein Blechpaket, mit zwölf nach innen gerichteten Statorzähnen 14, auf welche eine Stator- beziehungsweise Drehfeldwicklung des Elektromotors 2 aufgebracht ist.

Die Drehfeldwicklung wird beispielsweise in Form von Spulen auf die Statorzähne 14 gewickelt. Die Spulenenden 16 der (Einzel-)Spulen werden mittels der stirnseitig auf den Stator 6 aufgesetzten Schalteinheit 8 zu der in diesem Ausführungsbeispiel 3-phasigen Stator- oder Drehfeldwicklung verschaltet. Die axialen Spulenenden 12 werden mittels der Schalteinheit 8 mit drei Phasenanschlüssen 18 verschaltet. Hierzu ist ein Stanzgitter in die Schalteinheit 8 integriert, welches an Kontaktfahnen 16 mit den Spulenenden 12 kontaktiert oder verschaltet wird.

Die Verschaltung der Spulenenden 14 erfolgt hierbei insbesondere mittels eines Stanzgitters, welches in einem ringförmigen Grundkörper 20 der Schalteinheit 8 eingebettet ist. Das Stanzgitter ragt hierbei mittels Kontaktfahnen 22 aus dem Grundkörper 20 hinaus, wobei die Kontaktfahnen 22 mit den Spulenenden 16 kontaktiert, beispielsweise verschweißt oder verlötet, werden. Die Spulenenden 16 und Kontaktfahnen 22 sind in den Figuren lediglich beispielhaft mit Bezugszeichen versehen.

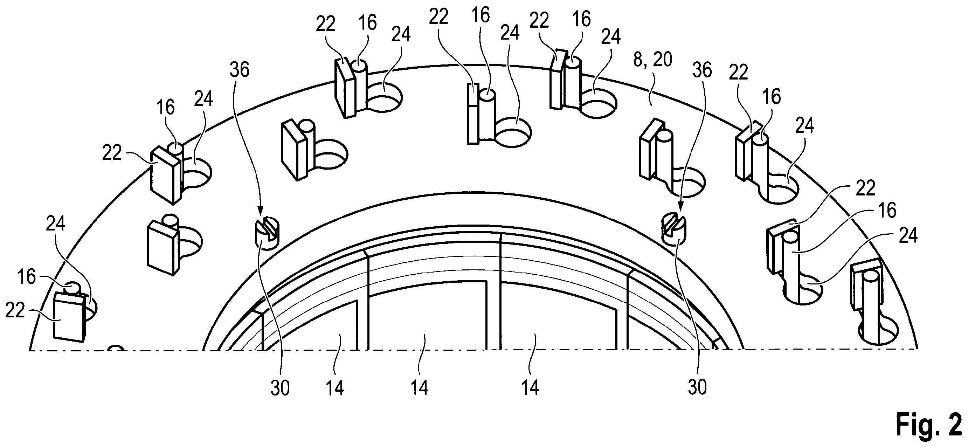

Wie in der Darstellung der Fig. 2 vergleichsweise deutlich ersichtlich ist, sind die Spulenenden 16 der Spulen durch radial innenseitige, axiale Durchführöffnungen 24 des Grundkörpers 20 geführt, und auf der dem Gehäusedeckel 10 zugewandten Oberseite des Grundkörpers 20 mit den Kontaktfahnen 22 kontaktiert.

Die Schalteinheit 8 ist mittels axialen Rastzungen 26 des Grundkörpers 20 form- und/oder kraftschlüssig an dem Statorpaket 12 befestigt oder befestigbar. Die Rastzungen 26 sind am Außenumfang verteilt und an der dem Statorpaket 12 zugewandten Seite des Grundkörpers 20 angeordnet. Das Statorpaket 12 weist hierbei an seinem Außenumfang axial verlaufende, in den Figuren lediglich beispielhaft mit Bezugszeichen versehene, Nuten 28 auf, in welche die Rastzungen 26 zur Befestigung klemmend eingreifen. Die Schalteinheit 8 ist somit an dem Statorpaket 12 zerstörungsfrei lösbar verrastet oder klemmbefestigt.

Zur Dämpfung oder Reduzierung der Schwingungen und Vibrationen des Gehäusedeckels 10 ist mindestens ein Abstandselement 30 vorgesehen, welches zwischen dem Gehäusedeckel 10 und der Schalteinheit 8 angeordnet ist. Das Abstandselement 30 ist hierbei zumindest in der tangentialen Richtung T und/oder in radialer Richtung R elastisch oder flexibel ausgebildet.

Nachfolgend sind anhand der Figuren 2 bis 8 ein nicht erfindungsgemäßes Ausführungsbeispiel für das Abstandselement 30 beschrieben.

Das beispielsweise zylindrische oder bolzenförmige Abstandselement 30 ist hierbei vorzugsweise als ein Kunststoffkörper ausgeführt, welcher mit der Schalteinheit 8 ein gemeinsames Bauteil bildet. Vorzugsweise ist eine Anzahl von Abstandselementen 30 an dem Grundkörper 20 vorgesehen, welche radial und/oder tangential verteilt angeordnet sind.

Das Abstandselement 30 ist an einem Innenumfang der ringförmigen Schalteinheit 8, also in radialer Richtung R so nahe wie möglich an der Längsachse (Drehachse) des Elektromotors 2, angeordnet, um axiale Schwingungen des Gehäusedeckels 10 möglichst effektiv zu minimieren oder zu reduzieren. Das Abstandselement 30 der Schalteinheit 8 liegt im Montagezustand freiendseitig direkt, also unmittelbar, an dem Gehäusedeckel 10 an.

Zur Montage des Gehäusedeckels 10 wird dieser beispielsweise in das Motorgehäuse 4 eingepresst (Press-Fit-Befestigung). Dadurch wird das elastische Abstandselement 30 zwischen der Schalteinheit 8 und dem Lagerschild 10 gestaucht und somit zumindest abschnittsweise elastisch verformt. Durch die elastische Verformung oder Biegung des Abstandselements 30 wird eine gewisse Vorspannkraft auf den Gehäusedeckel 10 ausgeübt.

Das Abstandselement 30 weist hierbei eine spezifische Geometrie auf, um die elastische Verformung zu kontrollieren und die (Gegen-/Rückstell-)Kraft auf den Gehäusedeckel 10 auszuüben. Während der Gehäusedeckel 10 im Gehäuse 4 befestigt wird, erfolgt vorzugsweise ein Toleranzausgleich aufgrund der elastischen Verformung des Abstandselements 30.

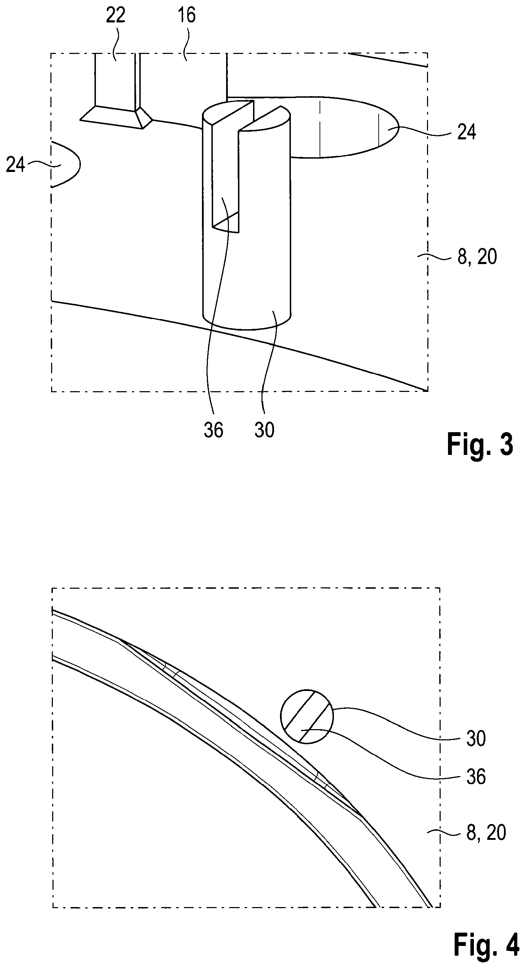

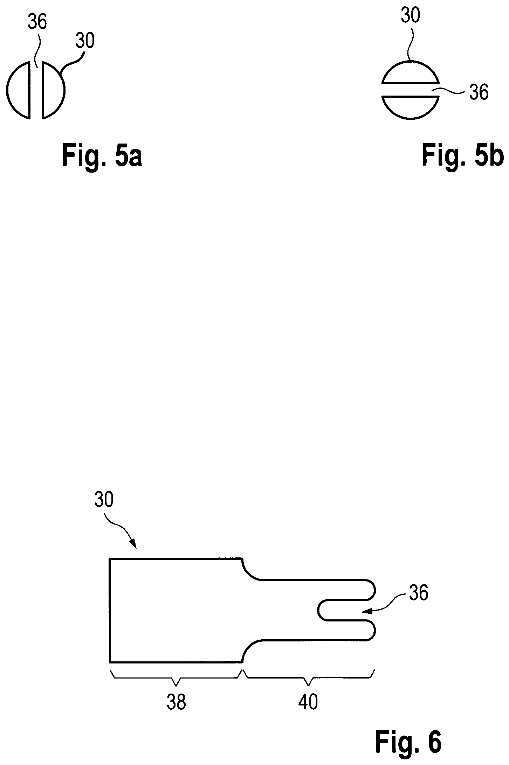

Diese Geometrie ist in den Ausführungsbeispielen der Fig. 3 bis Fig. 8 als eine freiendseitige Öffnung oder Schlitz 36 ausgeführt. Der Schlitz 36 durchsetzt das Freiende des Abstandselements 30 hierbei entlang einer Querrichtung im Wesentlichen vollständig, so dass das lagerschildseitige Freiende im Querschnitt etwa U-förmig ist. Der Schlitz 36 kann hierbei in radialer Richtung R (Fig. 5a) oder in tangentialer Richtung T (Fig. 5b) orientiert sein. Mit anderen Worten weist das Abstandselement 30 zur elastischen Verformung eine radiale Schlitzung für eine symmetrische Verformung oder eine tangentiale Schlitzung für eine asymmetrische Verformung auf.

In der Fig. 6 ist eine Schnittdarstellung des Abstandselements 30 gezeigt. Das Abstandselement 30 weist hierbei einen ersten Abschnitt 38 auf, welcher vorzugsweise in die Schalteinheit 8 integriert ist. Der Abschnitt 38 bildet hierbei das Festende des Abstandselements 30. An den ersten Abschnitt 38 schließt sich in axialer Richtung A einstückig, also einteilig oder monolithisch, ein zweiter Abschnitt 40 an, welcher der Schalteinheit 8 axial emporsteht und das geschlitzte Freiende aufweist.

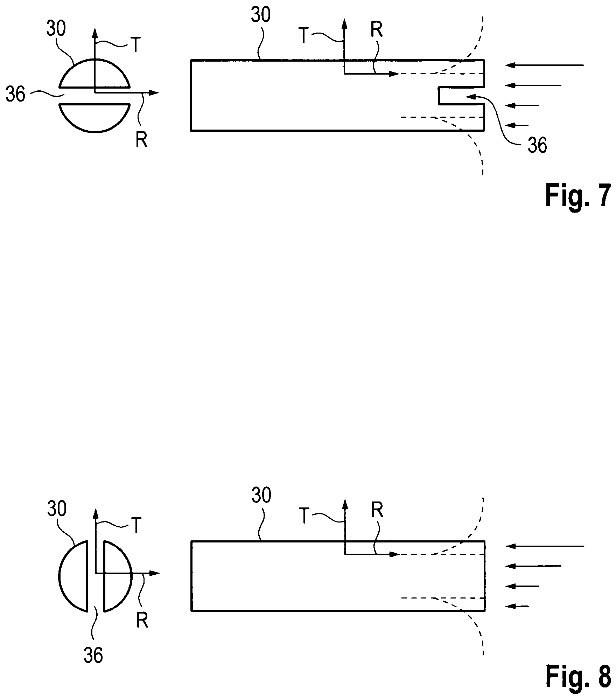

Wie in den Diagrammen der Figuren 7 und 8 ersichtlich ist, beeinflusst die Orientierung des Schlitzes 36 die Verformungseigenschaften des Abstandselements 30 bei einer axialen Belastung. Die Figuren 7 und 8 zeigen hierbei jeweils schematisch eine axiale Krafteinwirkung mittels Pfeilen. Bei einem radialen Schlitz 36 (Fig. 8) erfolgt insbesondere eine symmetrische Verformung des Abstandselements 30 im Zuge einer axialen Belastung durch einen schwingenden/vibrierenden Gehäusedeckel 10, wobei bei einem tangentialen Schlitz 36 (Fig. 7) insbesondere eine asymmetrische Verformung bewirkt wird. Die Verformung ist in den Figuren 7 und 8 mittels strichlinierten und punktierten Linien gezeigt.

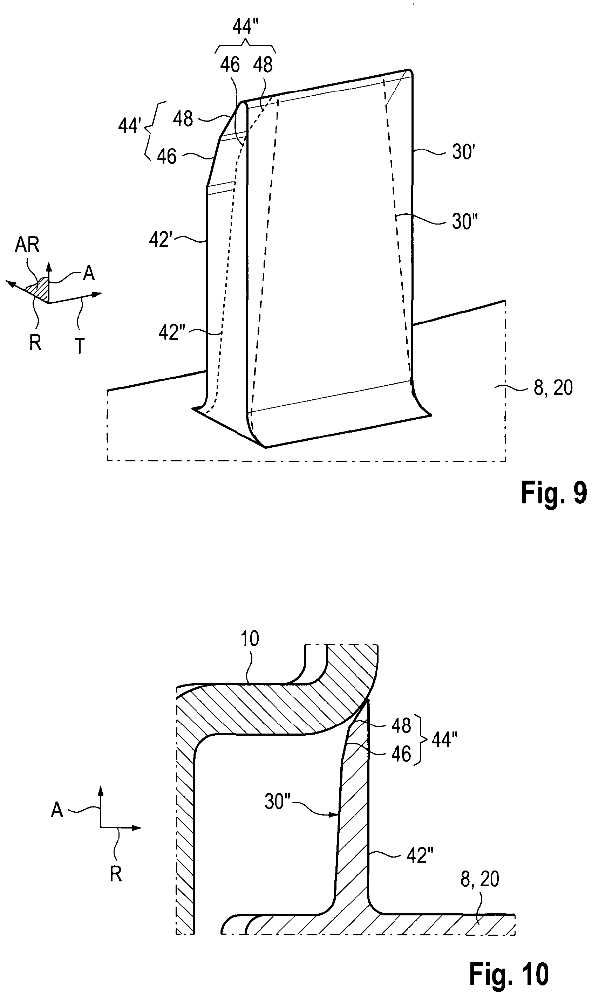

In der Figur 9 sind eine erste und zweite erfindungsgemäße Ausführungsform des Abstandselements 30', 30" gezeigt. Die Abstandselemente 30', 30" sind hierbei überlagert zueinander dargestellt. Das Abstandselement 30' ist hierbei mit durchgezogenen Linien, und das Abstandselement 30" strichliniert gezeigt.

Die Abstandselemente 30', 30" weisen jeweils einen dem Grundkörper 20 senkrecht emporstehenden Säulenkörper 42', 42" auf, an welchen eine freiendseitige Spitze 44', 44" angeformt ist. Die Säulenkörper 42', 42" weisen in dieser Ausführung in einer radialen und tangentialen Schnittebene RT jeweils eine rechteckförmige Querschnittsform auf. Die Kurzseiten der Abstandselemente 30', 30" sind hierbei im Wesentlichen in Radialrichtung R orientiert, wobei die Langseiten der Abstandselements 30', 30" im Wesentlichen in Tangentialrichtung T orientiert sind.

Die freiendseitige Spitze 44', 44" weist in einer axialen und radialen Schnittebene AR eine etwa nasenförmige Querschnittsform mit zwei unterschiedlichen Steigungen als Anlagefläche für den Gehäusedeckel 10 auf. Mit anderen Worten weist die Anlagefläche zwei Teil-Anlageflächen 46, 48 mit unterschiedlichen Steigungen oder Neigungen gegenüber der Axialrichtung A auf. Die untere, also die dem Grundkörper 20 nähere, Teil-Anlagefläche 46 weist hierbei eine größere Steigung oder Neigung gegenüber der Axialrichtung A auf, als die obere Teil-Anlagefläche 48.

Das Abstandselement 30" unterscheidet sich von dem Abstandselement 30' insbesondere dadurch, dass sich der Durchmesser des Abstandselements 30" entlang der Axialrichtung A verändert. Mit anderen Worten weist das Abstandselement 30' im Gegensatz zum Abstandselement 30" entlang der Axialrichtung A einen Säulenkörper 42' mit konstantem Durchmesser auf. Wie insbesondere in der Fig. 9 ersichtlich ist, verjüngt sich der Durchmesser des Abstandselements 30"hin entlang der Axialrichtung A insbesondere in tangentialer Richtung T. Beispielsweise weist das Abstandselements 30" hierbei eine (tangentiale) Seitenverjüngung von etwa 5° auf, welche sich über die gesamte axiale Höhe des Abstandselements 30", also über den Säulenkörper 42" und die Spitze 44", erstreckt. Des Weiteren weist das Abstandselement 30" eine (radiale) Frontverjüngung auf, so dass sich die radiale Dicke des Abstandselements 30" bis zur Spitze 44" hin verjüngt. Beispielsweise wird bei einem etwa 6 mm hohen Abstandselement 30" der radiale Durchmesser von 1,0 mm im Bereich der Schalteinheit 8 auf circa 0,72 mm bis zur Basis der Spitze 44" beziehungsweise zur Teil-Anlagefläche 46 reduziert. Dadurch ist das Abstandselement 30" flexibler als das Abstandselement 30' ausgeführt.

In dem Ausführungsbeispiel der Fig. 10 ist der Gehäusedeckel 10 beispielsweise federnd durch das Abstandselement 30" abgestützt. Der Gehäusedeckel 10 weist hierbei beispielsweise einen stufenförmigen Versatz 50 auf, an welchem das Abstandselement 30" freiendseitig mit der Spitze 44" anliegt. Im Montagezustand liegt das Abstandselement 30" hierbei mit der oberen Anlagefläche 48 unter gewisser Vorspannung an dem unteren Knick des Versatzes 50 des Gehäusedeckels 10 an. Bei einer axialen Belastung, bei welcher der axiale Abstand zwischen der Schalteinheit 8 und dem Gehäusedeckel 10 reduziert wird, gleitet das Abstandselement 30" zunächst mit der Teil-Anlagefläche 48 an dem Versatz 50 entlang, und wird dabei in Radialrichtung R abgelenkt oder gebogen. Bei zunehmender Belastung beziehungsweise Reduzierung des axialen Abstandes gleitet das Abstandselement 30" mit der Teil-Anlagefläche 46 an dem Versatz 50, und wird dabei sukzessive stärker in Radialrichtung R gebogen.

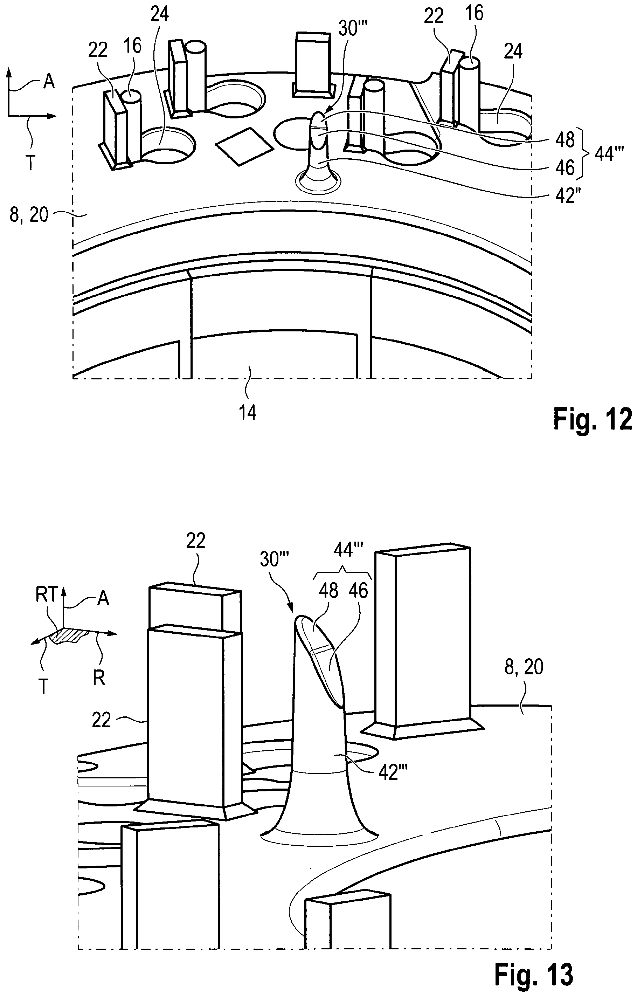

Nachfolgend ist anhand der Figuren 11 bis 13 ein drittes erfindungsgemäßes Ausführungsbeispiel des Abstandselements 30‴ näher erläutert. Wie in der Fig. 11 vergleichsweise deutlich ersichtlich ist, sind hierbei beispielweise drei Abstandselemente 30‴ an dem Grundkörper 20 der Schalteinheit 8 einstückig angeformt. Die Abstandselemente 30‴ sind hierbei gleichmäßig verteilt um die zentrale Ringöffnung des Grundkörpers 20 angeordnet.

Das Abstandselement 30‴ weist in dieser Ausführung in einer radialen und tangentialen Schnittebene RT eine kreisrunde Querschnittsform auf. In einer denkbaren Ausgestaltungsform verjüngen sich der Säulenkörper 42‴ und die Spitze 44‴ des Abstandselements 30‴ axial in Radialrichtung R und/oder in Tangentialrichtung T.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet wer-den, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

## Patentansprüche

1. Elektromotor (2) für ein Kraftfahrzeug, insbesondere für ein Brems- oder Lenkungssystem, aufweisend ein Motorgehäuse (4) mit einem Gehäusedeckel (10), und ein in das Motorgehäuse (4) eingesetzten Stator (6) mit einer ringförmigen Schalteinheit (8), welche an einer dem Gehäusedeckel (10) zugewandten Stirnseite angeordnet ist,
- wobei an der Schalteinheit (8) mindestens ein in Richtung des Gehäusedeckels (10) axial emporstehendes Abstandselement (30, 30', 30", 30‴) angeordnet ist,
- wobei das Abstandselement (30, 30', 30", 30‴) zumindest in radialer Richtung (R) und/oder tangentialer Richtung (T) elastisch ausgeführt ist,
- wobei das Abstandselement (30', 30", 30‴) einen Säulenkörper (42', 42", 42‴) mit einer freiendseitigen Spitze (44', 44", 44‴) aufweist,
- wobei die Spitze (44', 44", 44‴) eine Anlagefläche für den Gehäusedeckel (10) aufweist, und
- wobei die Anlagefläche zwei Teil-Anlageflächen (46, 48) mit unterschiedliche Steigungen gegenüber der Axialrichtung (A) aufweist.

2. Elektromotor (2) nach Anspruch 1,
**dadurch gekennzeichnet,**
**dass** das Abstandselement (30, 30', 30", 30‴) den Gehäusedeckel (10) federnd abstützt.

3. Elektromotor (2) nach Anspruch 1 oder 2,
**dadurch gekennzeichnet,**
**dass** das Abstandselement (30, 30', 30", 30‴) einstückig an die Schalteinheit (8) angeformt ist.

4. Elektromotor (2) nach einem der Ansprüche 1 bis 3,
**dadurch gekennzeichnet,**
**dass** das Abstandselement (30, 30', 30", 30‴) freiendseitig an dem Gehäusedeckel (10) anliegt.

5. Elektromotor (2) nach einem der Ansprüche 1 bis 4,
**dadurch gekennzeichnet,**
**dass** der Gehäusedeckel (10) einen stufenförmigen Versatz (50) aufweist, an welchem das Abstandselement (30, 30', 30", 30‴) freiendseitig anliegt.

6. Elektromotor (2) nach einem der Ansprüche 1 bis 5,
**dadurch gekennzeichnet,**
**dass** sich der Durchmesser des Abstandselements (30", 30‴) entlang der Axialrichtung (A) verändert.

7. Elektromotor (2) nach Anspruch 6,
**dadurch gekennzeichnet,**
**dass** sich der Durchmesser des Abstandselements (30", 30‴) entlang der Axialrichtung (A) in radialer Richtung (R) und/oder tangentialer Richtung (T) verjüngt.

## Claims

1. Electric motor (2) for a motor vehicle, in particular for a brake system or steering system, having a motor housing (4), which has a housing cover (10), and having a stator (6), which is inserted into the motor housing (4) and has a ring-shaped switching unit (8) which is arranged on an end face which faces towards the housing cover (10),
- wherein at least one spacer element (30, 30', 30", 30‴) projecting axially upwards in the direction of the housing cover (10) is arranged on the switching unit (8),
- wherein the spacer element (30, 30', 30", 30‴) is configured to be elastic at least in a radial direction (R) and/or a tangential direction (T),
- wherein the spacer element (30', 30", 30‴) has a column body (42', 42", 42‴) with a free-end-side tip (44', 44", 44‴),
- wherein the tip (44', 44", 44‴) has an abutment surface for the housing cover (10), and
- wherein the abutment surface has two partial abutment surfaces (46, 48) with different slopes in relation to the axial direction (A).

2. Electric motor (2) according to Claim 1,
**characterized**
**in that** the spacer element (30, 30', 30", 30‴) resiliently supports the housing cover (10).

3. Electric motor (2) according to Claim 1 or 2,
**characterized**
**in that** the spacer element (30, 30', 30", 30‴) is formed in one piece on the switching unit (8).

4. Electric motor (2) according to one of Claims 1 to 3,
**characterized**
**in that** the spacer element (30, 30', 30", 30‴) abuts at the free-end side against the housing cover (10).

5. Electric motor (2) according to one of Claims 1 to 4,
**characterized**
**in that** the housing cover (10) has a step-like offset (50) against which the spacer element (30, 30', 30", 30‴) abuts at the free-end side.

6. Electric motor (2) according to one of Claims 1 to 5,
**characterized**
**in that** the diameter of the spacer element (30", 30‴) varies along the axial direction (A).

7. Electric motor (2) according to Claim 6,
**characterized**
**in that** the diameter of the spacer element (30", 30‴) narrows in the radial direction (R) and/or tangential direction (T) along the axial direction (A).

## Revendications

1. Moteur électrique (2) pour un véhicule automobile, en particulier pour un système de freinage ou de direction, comportant un carter de moteur (4) avec un couvercle de carter (10) et un stator (6) inséré dans le carter de moteur (4) avec une unité de commutation annulaire (8), laquelle est disposée sur un côté frontal faisant face au couvercle de carter (10),
- au moins un élément d'écartement (30, 30', 30", 30‴) qui s'élève axialement en direction du couvercle de carter (10) étant disposé au niveau de l'unité de commutation (8),
- l'élément d'écartement (30, 30', 30", 30"') étant réalisé élastique au moins dans la direction radiale (R) et/ou la direction tangentielle (T),
- l'élément d'écartement (30', 30", 30‴) possédant un corps de colonne (42', 42", 42‴) pourvu d'une pointe (44', 44", 44‴) côté extérieur,
- la pointe (44', 44", 44‴) possédant une surface d'appui pour le couvercle de carter (10), et
- la surface d'appui possédant deux surfaces d'appui partielles (46, 48) ayant des pentes différentes par rapport à la direction axiale (A).

2. Moteur électrique (2) selon la revendication 1,
**caractérisé en ce**
**que** l'élément d'écartement (30, 30', 30", 30‴) soutient le couvercle de carter (10) de manière élastique.

3. Moteur électrique (2) selon la revendication 1 ou 2,
**caractérisé en ce**
**que** l'élément d'écartement (30, 30', 30", 30‴) est moulé d'une seule pièce sur l'unité de commutation (8).

4. Moteur électrique (2) selon l'une des revendications 1 à 3,
**caractérisé en ce**
**que** l'élément d'écartement (30, 30', 30", 30‴) repose contre le couvercle de carter (10) du côté de l'extrémité libre.

5. Moteur électrique (2) selon l'une des revendications 1 à 4,
**caractérisé en ce**
**que** le couvercle de carter (10) présente un décalage en forme de gradin (50) contre lequel l'élément d'écartement (30, 30', 30", 30"') repose du côté de l'extrémité libre.

6. Moteur électrique (2) selon l'une des revendications 1 à 5,
**caractérisé en ce**
**que** le diamètre de l'élément d'écartement (30", 30"') change le long de la direction axiale (A).

7. Moteur électrique (2) selon la revendication 6,
**caractérisé en ce**
**que** le diamètre de l'élément d'écartement (30", 30‴) se rétrécit le long de la direction axiale (A) dans la direction radiale (R) et/ou la direction tangentielle (T).
